(19) Europäisches Patentamt / European Patent Office / Office européen des brevets

(11) **EP 2 463 885 B1**

(12) **FASCICULE DE BREVET EUROPEEN**

(45) Date de publication et mention
de la délivrance du brevet:
**22.05.2013 Bulletin 2013/21**

(51) Int Cl.:
*H01H 71/24* *(2006.01)*

(21) Numéro de dépôt: **11354064.5**

(22) Date de dépôt: **08.11.2011**

(54) **Disjoncteur limiteur de courant**

Elektrischer Schutzschalter mit Strombegrenzer

Current-limiting circuit breaker

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.12.2010 FR 1004812**

(43) Date de publication de la demande:
**13.06.2012 Bulletin 2012/24**

(73) Titulaire: **Schneider Electric Industries SAS
92500 Rueil-Malmaison (FR)**

(72) Inventeur: **Diconne, Robert
38050 Grenoble Cedex 09 (FR)**

(74) Mandataire: **Picard, Laurent et al
Schneider Electric Industries SAS
World Trade Center
38EE1 / Service Propriété Industrielle
5 Place Robert Schuman
38050 Grenoble Cedex 09 (FR)**

(56) Documents cités:
**EP-A1- 1 538 645        EP-A1- 2 251 887
DE-A1-102005 040 432     FR-A1- 2 446 538**

## Description

### DOMAINE TECHNIQUE DE L'INVENTION

L'invention est relative à un disjoncteur limiteur de courant destiné à être connecté au réseau et à une charge entre une borne d'entrée et une borne de sortie. Ledit disjoncteur comporte un circuit principal comprenant un commutateur ultra rapide connecté en série entre les bornes d'entrée et de sortie, l'ouverture dudit commutateur étant opérée lorsque le circuit principal est traversé par un courant de court-circuit. Ledit disjoncteur comporte un circuit secondaire comprenant des moyens de limitation ultra-rapide connectés en parallèle au circuit principal, lesdits moyens étant traversés par un courant électrique de court-circuit lorsque le commutateur ultra rapide est ouvert sous l'effet d'un court-circuit.

### ETAT DE LA TECHNIQUE ANTERIEURE

La protection en court-circuit de lignes électriques est généralement assurée par des disjoncteurs électromagnétiques ou des fusibles, il arrive que celles-ci soient réalisées par des disjoncteurs rapides limiteur de courant.

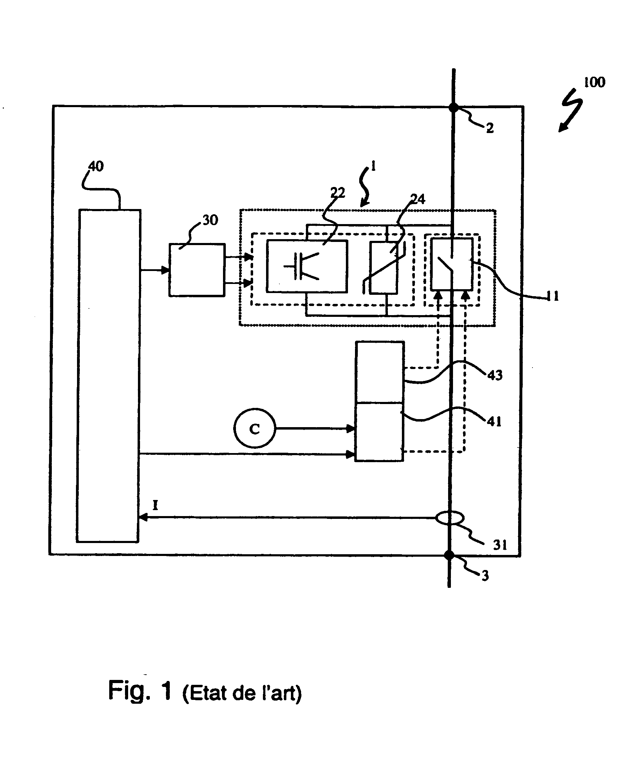

En référence à la figure 1, le disjoncteur limiteur de courant 100 est destiné à être disposé dans un circuit électrique et comporte un circuit interne de coupure 1, en l'occurrence un commutateur ultra rapide à contact mécanique 11 monté en parallèle avec un interrupteur statique 22. Le commutateur à contact mécanique 11 est fermé par défaut. Le circuit interne de coupure 1 est disposé en série sur le circuit électrique et est connecté à des moyens de commande 30 permettant notamment d'ouvrir et de fermer le circuit interne de coupure 1.

Le disjoncteur limiteur 100 comporte au moins un élément dont l'impédance varie en fonction de la tension selon une fonction non linéaire pour dissiper l'énergie inhérente à la limitation d'un court-circuit lorsque les moyens interrupteurs sont ouverts. En d'autres termes, l'élément dont l'impédance varie en fonction du courant la tension est un élément à résistance dépendante de la tension. Cet élément est en l'occurrence une varistance 24 connectée en parallèle de l'interrupteur statique 22 pour dissiper l'énergie stockée dans le circuit électrique lorsque l'interrupteur statique 22 passe d'un état fermé à un état ouvert.

Dans le mode de réalisation représenté à la figure 1, l'interrupteur statique 22 est bidirectionnel en tension et en courant, et il est commandé par l'entremise des moyens de commande 30 connecté à une unité de commande 40. Le commutateur ultra rapide à contact mécanique 11 est, quant à lui, à effet Thomson et permet de passer très rapidement de l'état fermé à l'état ouvert en quelques dizaines de microsecondes. Généralement, la vitesse d'ouverture des contacts mécaniques est supérieure à 1 mètre par seconde quand le courant croit à une vitesse de 10 Ampères par microseconde. Le commutateur à contact mécanique 11 est commandé à l'aide de l'unité de commande 40 par l'entremise d'un premier circuit 41 de propulsion des contacts permettant d'ouvrir rapidement ledit commutateur et d'un second circuit 43 de verrouillage ou de relâchement permettant de maintenir ouvert ou de refermer ledit commutateur.

Ainsi l'unité de commande 40 permet d'ouvrir le circuit électrique, après l'identification d'un courant de court-circuit. Dans le mode de réalisation représenté à la figure 1, cette identification d'un courant de court-circuit est réalisée en utilisant un capteur 31 pour mesurer la valeur du courant I circulant dans le circuit électrique, ledit capteur étant connecté à l'unité de commande 40.

Cependant, l'utilisation d'un commutateur à contact mécanique à effet Thomson nécessite une forte accumulation d'énergie pour fonctionner. Ceci implique d'utiliser des capacités de forte dimension pour l'actionnement de l'actionneur Thomson décrit. En outre, l'unité de commande 40 doit être apte à gérer une synchronisation temporelle l'ensemble du système. Ainsi, le cout de cet ensemble de commande est élevé.

DE 102005040432 décrit un disjoncteur limiteur de courant selon la préambule de la revendication 1.

### EXPOSE DE L'INVENTION

L'invention vise donc à remédier aux inconvénients de l'état de la technique, de manière à proposer un disjoncteur limiteur de courant comprenant actionneur de commande ultra-rapide ayant fonctionnement simplifiée comme il est décrit dans la revendication 1 et les revendications dépendantes.

Le commutateur ultra rapide du circuit principal du disjoncteur selon l'invention comprend une première bobine de commande connectée en série entre les bornes d'entrée et de sortie et étant apte à générer un champ magnétique de commande. Un barreau de commutation mobile supportant un conducteur électrique principal et un conducteur électrique secondaire est soumis au champ magnétique de commande pour se déplacer entre une première position de fermeture et une seconde position d'ouverture sous l'action d'une force de Laplace générée par un courant électrique circulant dans au moins un des deux conducteurs. Le conducteur principal relie les bornes d'entrée et de sortie lorsque le barreau de commutation mobile est dans la première position de fermeture. Le conducteur secondaire relie les bornes d'entrée et de sortie aux moyens de limitation ultra-rapide du circuit secondaire lorsque le barreau de commutation mobile est dans la seconde position d'ouverture.

Selon un mode de développement de l'invention, le commutateur ultra rapide comporte une culasse magnétique fixe ayant deux pôles magnétiques placés en vis en vis. Le barreau de commutation mobile est positionné entre lesdits pôles de manière à ce que les conducteurs principal et secondaire aient respectivement des axes longitudinaux perpendiculaires à la direction du champ magnétique de commande polarisant les deux pôles magnétiques.

Selon un mode particulier de réalisation, le commutateur ultra rapide comporte une seconde bobine de commande connectée en série avec le circuit secondaire et étant parcourue par un courant de court-circuit pour générer un champ magnétique de commande complémentaire polarisant les deux pôles magnétiques placés en vis en vis, les champs magnétiques de commande ayant la même direction.

De préférence, le commutateur ultra rapide comporte des moyens élastiques de rappel du barreau mobile dans la position de fermeture, les moyens élastiques de rappel générant une force de rappel inférieure à la force de Laplace pour des courants de court-circuit.

Avantageusement, les moyens de limitation ultra-rapide du circuit secondaire connectés en parallèle au circuit principal comportent un interrupteur statique commandé par des moyens de commande.

Avantageusement, les moyens de limitation ultra-rapide du circuit secondaire connectés en parallèle au circuit principal comportent un disjoncteur à contact mécanique.

Avantageusement, le circuit secondaire comporte au moins un élément à résistance dépendante de la tension connecté en parallèle avec les moyens de limitation ultra-rapide pour dissiper l'énergie stockée dans lesdits moyens lorsque l'interrupteur statique est dans un état ouvert.

Avantageusement, le conducteur secondaire est connecté aux moyens de limitation ultra-rapide du circuit secondaire par un conducteur souple et déformable.

Selon un mode particulier de réalisation, le conducteur secondaire comporte au moins deux branches électriques reparties de manière uniforme sur la périphérie du barreau mobile.

## BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :

la figure 1 représente un schéma fonctionnel d'un disjoncteur limiteur de courant de type connu ;

la figure 2 représente le schéma général du disjoncteur limiteur de courant objet de l'invention ;

la figure 3 représente un circuit interne de coupure d'un disjoncteur limiteur de courant en position fermée selon un mode préférentiel de réalisation de l'invention ;

la figure 4 représente une vue de détail en coupe d'un commutateur ultra rapide du circuit interne de coupure selon la figure 2 ;

la figure 5 représente le circuit interne de coupure selon la figure 2 dans une position ouverte ;

la figure 6 représente une vue de détail en coupe d'un commutateur ultra rapide du circuit interne de coupure selon la figure 5 ;

la figure 7 représente une variante de réalisation du commutateur ultra rapide des différents modes de réalisation de l'invention.

## DESCRIPTION DETAILLEE D'UN MODE DE REALISATION

Le disjoncteur limiteur de courant 100 est destiné à être connecté au réseau et à une charge entre une borne d'entrée 2 et une borne de sortie 3.

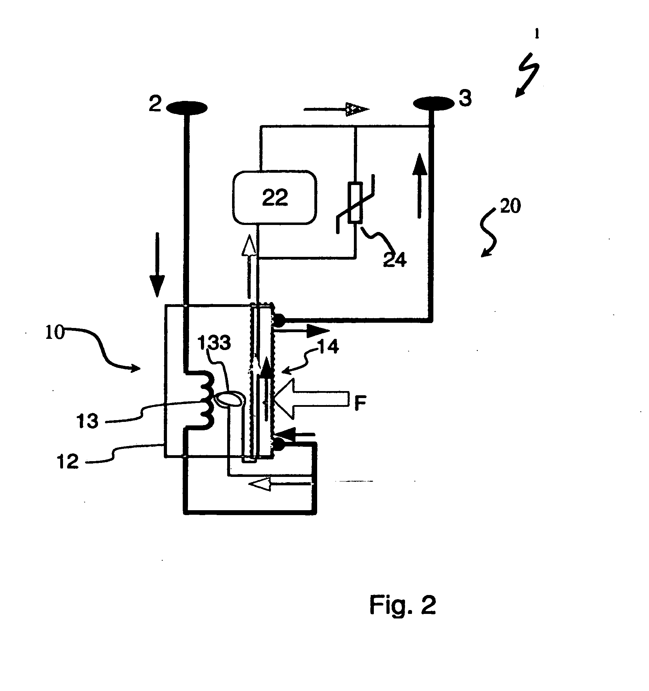

Selon un mode de réalisation préférentiel tel que représenté sur la figure 2, le disjoncteur comporte un circuit interne de coupure 1.

Le circuit interne de coupure 1 comporte un circuit principal 10 comprenant un commutateur ultra rapide 11 connecté en série entre les bornes d'entrée et de sortie 2, 3. L'ouverture dudit commutateur est opérée lorsque le circuit principal 10 est traversé par un courant de court-circuit (I).

En outre, le circuit interne de coupure 1 du disjoncteur limiteur de courant 100 comporte un circuit secondaire 20 comprenant des moyens de limitation ultra-rapide 22 connectés en parallèle du circuit principal 10. Lesdits moyens sont traversés par un courant électrique de court-circuit I lorsque le commutateur ultra rapide 11 est ouvert sous l'effet d'un court-circuit.

Selon un mode de réalisation de l'invention, le commutateur ultra rapide 11 comprend une première bobine de commande 13 connectée en série entre les bornes d'entrée et de sortie 2, 3. Ladite première bobine est apte à générer un champ magnétique de commande B lorsqu'elle est traversée par un courant électrique.

Le commutateur ultra rapide 11 comporte un barreau de commutation mobile 14 supportant un conducteur électrique principal 15 et un conducteur électrique secondaire 16. Le barreau de commutation mobile 14 est soumis au champ magnétique de commande B pour se déplacer entre une première position de fermeture et une seconde position d'ouverture sous l'action d'une force de Laplace F générée par un courant électrique (I) circulant dans au moins un des deux conducteurs 15, 16.

Selon un mode préférentiel de réalisation, le commutateur ultra rapide 11 comporte une culasse magnétique 12 fixe ayant deux pôles magnétiques placés en vis en vis. Le barreau de commutation mobile 14 est alors positionné entre lesdits pôles de manière à ce que les conducteurs principal et secondaire 15, 16 aient respectivement des axe longitudinaux perpendiculaires à la direction du champ magnétique de commande B polarisant les deux pôles magnétiques.

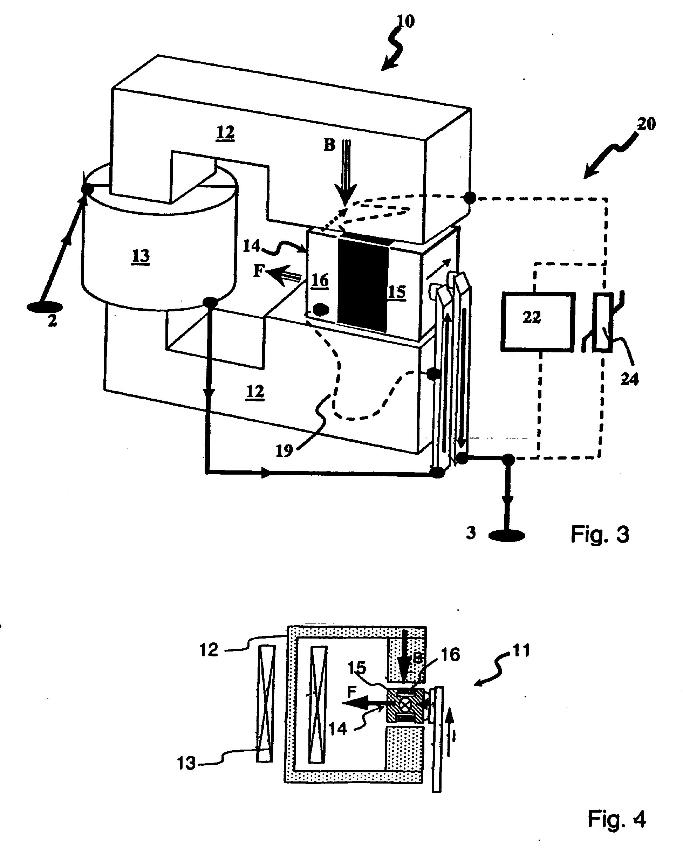

Comme représenté sur les figures 3 et 4, le conducteur principal 15 relie les bornes d'entrée 2 et de sortie 3 du circuit principal 10 lorsque le barreau de commutation mobile 14 est dans la première position dite de fermeture.

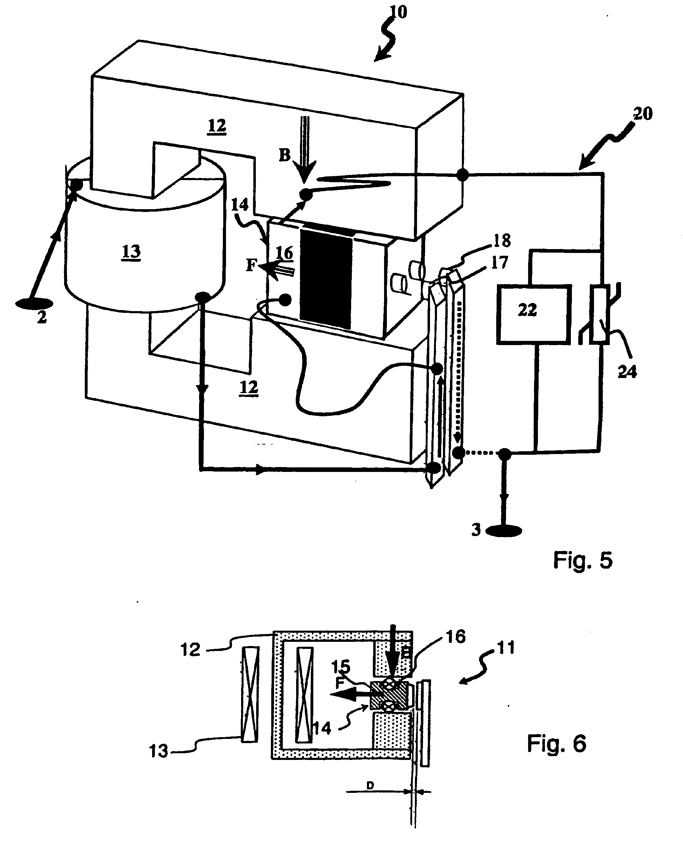

Comme représenté sur les figures 5 et 6, le conducteur secondaire 16 relie les bornes d'entrée et de sortie 2, 3 aux moyens de limitation ultra-rapide 22 du circuit secondaire 20 lorsque le barreau de commutation mobile 14 est dans la seconde position d'ouverture.

A titre d'exemple de réalisation, le conducteur principal 15 se comporte comme un pont de contact mobile. Le pont de contact mobile est alors relié au circuit principal par deux contacts fixes 17, 18 lorsque le barreau de commutation 14 mobile est dans la position de fermeture.

Lorsque conducteur principal 15 et/ou le conducteur secondaire 16 sont traversés par un courant électrique, le barreau de commutation mobile 14 tend à se déplacer sous l'action d'une force de Laplace F, dont l'équation est la suivante :

$$d\vec{F} = I \cdot d\vec{l} \wedge \vec{B}$$

Où :

- B est le champ magnétique de commande généré par la bobine de commande 13,

- I le courant électrique traversant le conducteur principal 15 et/ou le conducteur secondaire 16,

- l la longueur respective des conducteurs principal et/ou secondaire.

Le barreau de commutation mobile 14 peut se déplacer entre une première position de fermeture et une seconde position d'ouverture sous l'action d'une force de ladite Laplace F.

Le commutateur ultra rapide 11 comporte des moyens élastiques de rappel du barreau mobile 14 dans la position de fermeture. Les moyens élastiques de rappel, non représentés, génèrent une force de rappel supérieure à la force de Laplace F pour des courants de fonctionnement dits normaux, c'est-à-dire des courants inférieurs à un seuil de courant dit de court retard. En outre, la force de rappel est calibrée de manière à être inférieure à la force de Laplace F lorsque le disjoncteur est traversé par des courants de court-circuit.

Comme représenté sur la figure 3, lorsque ledit barreau est dans la position de fermeture, le courant électrique traverse le disjoncteur entre la bornes d'entrée 2 et la borne de sortie en circulant au travers de la bobine de commande 13 et le conducteur principal 15. Compte tenu de l'impédance du circuit secondaire le courant électrique circulant dans ledit circuit est négligeable. A titre d'exemple, l'impédance du circuit secondaire est au moins dix fois supérieure à l'impédance du circuit principal.

Lorsque le courant électrique traversant le conducteur principal est supérieur au seuil de déclenchement, la force de Laplace F générée est d'intensité supérieure à la force de rappel générée par les moyens élastique de rappel. En pratique, le seuil de déclenchement est déterminé de manière à ce qu'un courant de court-circuit soit responsable d'une force de Laplace apte à déplacer le barreau mobile 14 de la position de fermeture vers la position d'ouverture. Le courant de court-circuit est généralement compris entre 10 à 100 fois le courant nominal de fonctionnement In.

Le déplacement du barreau mobile de la position de fermeture à la position d'ouverture entraine une déconnexion du conducteur principal 14 du circuit principal.

Le courant de court-circuit commute immédiatement dans le conducteur secondaire 16. Le conducteur secondaire 16 étant solidaire du barreau mobile 14 se déplace concomitamment avec ce dernier. Grâce à ce double déplacement des deux conducteurs, la force motrice de Laplace est maintenue. Le barreau mobile 14 est aussi maintenu vers la position d'ouverture.

Comme représenté sur la figure 5, lorsque ledit barreau est dans la position d'ouverture, le courant électrique traverse le disjoncteur entre la bornes d'entrée 2 et la borne de sortie en circulant au travers de la bobine de commande 13 et le conducteur secondaire 16 et les moyens de limitation ultra-rapide 22 du circuit secondaire 20.

Lesdits moyens de limitation ultra-rapide 22 assurent la coupure générale du circuit de manière ultra rapide. Compte tenu que le courant électrique de court-circuit est coupé très rapidement, l'énergie électrique I²t vue par le circuit secondaire 20 est faible et il peut être ainsi dimensionné en conséquence notamment en utilisant des sections de conducteur relativement faible. On entend par section relativement faible des sections inférieures à 1 mm² pour un courant nominal de 100A. L'intérêt d'utiliser des disjoncteurs limiteurs de courant 100 selon les modes de réalisation de l'invention est d'autant plus élevé que le courant nominal In est élevé, c'est dire pour des courants électriques dont l'intensité est comprise entre 60 A et quelques centaines d'Ampères.

A titre d'exemple de réalisation, le conducteur secondaire 16 est connecté aux moyens de limitation ultra-rapide 22 du circuit secondaire 20 par un conducteur souple 19 et déformable.

Comme la section du conducteur secondaire 16 est faible, il est aussi possible de doubler la section du conducteur secondaire. Selon un mode de réalisation de l'invention tel que représenté sur les figures 4, 5 et 6, le conducteur secondaire 16 comporte au moins deux branches électriques reparties de manière uniforme sur la périphérie du barreau mobile 14. Selon ce mode de réalisation, la force motrice de Laplace F générée est ainsi multipliée par un facteur deux.

Le circuit secondaire 20 comporte au moins un élément à résistance dépendante de la tension 24. Ledit élément est connecté en parallèle avec les moyens de limitation ultra-rapide 22. En outre, l'élément à résistance dépendante de la tension 24 tel que par exemple une varistance est utilisée de manière traditionnelle pour dissiper l'énergie stockée dans ledit circuit lorsque les moyens de limitation ultra-rapide 22 sont dans un état ouvert.

Selon un mode particulier de réalisation de l'invention, les moyens de limitation ultra-rapide 22 du circuit secondaire 20 connectés en parallèle au circuit principal 10 comportent un interrupteur statique commandé par des moyens de commande 30. A titre d'exemple de réalisation, l'interrupteur statique comporte un transistor de type IGBT.

Selon un mode particulier de réalisation de l'invention, les moyens de limitation ultra-rapide 22 du circuit secondaire 20 connectés en parallèle au circuit principal 10 comportent un disjoncteur à contact mécanique. Le dimensionnement de cet organe de coupure du circuit secondaire 20 ne se fera que sur la contrainte thermique ($I^2t$) supportée après le passage d'un courant de court-circuit. A titre d'exemple de réalisation, l'organe de coupure pourra être un disjoncteur 10A comportant ainsi une capacité de coupure très rapide du court circuit, Communément la contrainte thermique acceptable par un disjoncteur classique est d'un ordre de grandeur supérieur à 50000 $A^2$s, le circuit secondaire et notamment le bloc ultra limiteur 22 ne verra qu'une contrainte thermique d'un ordre de grandeur 500 à 3000 $A^2$s.

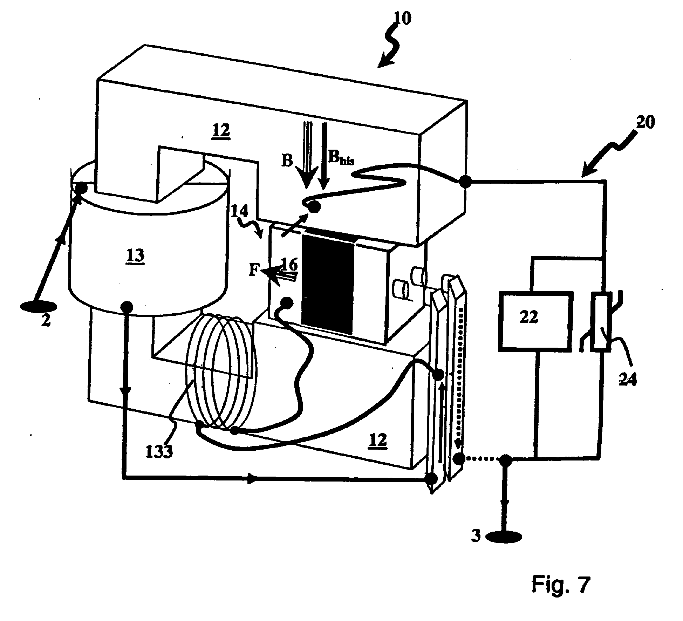

Selon une variante de réalisation telle représentée sur la figure 7, le commutateur ultra rapide 11 comporte une seconde bobine de commande 133 connectée en série avec le circuit secondaire 20. La seconde bobine 133 est alors parcourue par le courant de court-circuit pour générer un champ magnétique de commande complémentaire $B_{bis}$ polarisant les deux pôles magnétiques placés en vis en vis, les champs magnétiques de commande B, $B_{bis}$ ayant la même direction. En outre, le second champ magnétique tend à accélérer le mouvement du barreau mobile. On peut parler d'un système avalancheux.

**Revendications**

1. Disjoncteur limiteur de courant (100) destiné à être connecté au réseau et à une charge entre une borne d'entrée (2) et une borne de sortie (3), et comportant

   - un circuit principal (10) comprenant un commutateur ultra rapide (11) connecté en série entre les bornes d'entrée et de sortie (2, 3), l'ouverture dudit commutateur étant opérée lorsque le circuit principal (10) est traversé par un courant de court-circuit (I) ;
   - un circuit secondaire (20) comprenant des moyens de limitation ultra-rapide (22) connectés en parallèle au circuit principal (10), lesdits moyens étant traversés par un courant électrique de court-circuit (I) lorsque le commutateur ultra rapide (11) est ouvert sous l'effet d'un court-circuit ; commutateur ultra rapide (11) **caractérisé en ce qu'**il comprend

   - une première bobine de commande (13) connectée en série entre les bornes d'entrée et de sortie (2, 3) et étant apte à générer un champ magnétique de commande (B), characterisé **en ce qu'**il comporte
   - un barreau de commutation mobile (14) supportant un conducteur électrique principal (15) et un conducteur électrique secondaire (16) et étant soumis au champ magnétique de commande (B) pour se déplacer entre une première position de fermeture et une seconde position d'ouverture sous l'action d'une force de Laplace (F) générée par un courant électrique (I) circulant dans au moins un des deux conducteurs (15, 16) ;

   - le conducteur principal (15) reliant les bornes d'entrée (2) et de sortie (3) du circuit principal (10) lorsque le barreau de commutation mobile (14) est dans la première position de fermeture ;
   - le conducteur secondaire (16) reliant les bornes d'entrée et de sortie (2, 3) aux moyens de limitation ultra-rapide (22) du circuit secondaire (20) lorsque le barreau de commutation mobile (14) est dans la seconde position d'ouverture.

2. Disjoncteur limiteur de courant selon la revendication 1 **caractérisé en ce que** le commutateur ultra rapide (11) comporte une culasse magnétique (12) fixe
   ayant deux pôles magnétiques placés en vis en vis ; le barreau de commutation mobile (14) étant positionné entre lesdits pôles de manière à ce que les conducteurs principal et secondaire (15, 16) aient respectivement des axes longitudinaux perpendiculaires à la direction du champ magnétique de commande (B) polarisant les deux pôles magnétiques.

3. Disjoncteur limiteur de courant selon les revendications 1 ou 2, **caractérisé en ce que** le commutateur ultra rapide (11) comporte une seconde bobine de commande (133) connectée en série avec le circuit secondaire (20) et étant parcouru par un courant de court-circuit pour générer un champ magnétique de commande complémentaire ($B_{bis}$) polarisant les deux pôles magnétiques placés en vis en vis, les champs magnétiques de commande (B, Bis) ayant la même direction.

4. Disjoncteur limiteur de courant selon la revendication 1, **caractérisé en ce que** le commutateur ultra rapide (11) comporte des moyens élastiques de rappel du barreau mobile (14) dans la position de fermeture, les moyens élastiques de rappel générant une force de rappel inférieure à la force de Laplace (F) pour des courants de court-circuit.

5. Disjoncteur limiteur de courant selon les revendications 1 ou 2, **caractérisé en ce que** les moyens de limitation ultra-rapide (22) du circuit secondaire (20) connectés en parallèle au circuit principal (10) comportent un interrupteur statique commandé par des moyens de commande (30).

6. Disjoncteur limiteur de courant selon les revendications 1 ou 2, **caractérisé en ce que** les moyens de limitation ultra-rapide (22) du circuit secondaire (20) connectés en parallèle au circuit principal (10) comportent un disjoncteur à contact mécanique.

7. Disjoncteur limiteur de courant selon la revendication 3, **caractérisé en ce que** le circuit secondaire (20) comporte au moins un élément à résistance dépendante de la tension (24) connecté en parallèle avec les moyens de limitation ultra-rapide (22) pour dissiper l'énergie stockée dans lesdits moyens lorsque l'interrupteur statique est dans un état ouvert.

8. Disjoncteur limiteur de courant selon l'une quelconque des revendications précédente, **caractérisé en ce que** le conducteur secondaire (16) est connecté aux moyens de limitation ultra-rapide (22) du circuit secondaire (20) par un conducteur souple et déformable (19).

9. Disjoncteur limiteur de courant selon l'une quelconque des revendications précédente, **caractérisé en ce que** le conducteur secondaire (16) comporte au moins deux branches électriques reparties de manière uniforme sur la périphérie du barreau mobile (14).

**Patentansprüche**

1. Strombegrenzender Leistungsschalter (100), der dazu dient, zwischen einer Eingangsklemme (2) und einer Ausgangsklemme (3) an das Leitungsnetz sowie an eine Last angeschlossen zu werden, und der

- einen Hauptstromkreis (10) mit einem, in Reihe zwischen die Eingangsklemme und die Ausgangsklemme (2, 3) geschalteten, ultraschnellen Schalter (11), dessen Ausschaltung erfolgt, wenn der Hauptstromkreis (10) von einem Kurzschlussstrom (I) durchflossen wird,
- sowie einen Nebenstromkreis (20) mit parallel zum Hauptstromkreis (10) geschalteten, ultraschnellen Begrenzermitteln (22) umfasst, wobei die genannten Mittel von einem Kurzschlussstrom (I) durchflossen werden, wenn der ultraschnelle Schalter (11) durch Kurzschlusswirkung ausschaltet, welcher ultraschnelle Umschalter (11) **dadurch gekennzeichnet ist, dass** er
- eine in Reihe zwischen die Eingangs- und die Ausgangsklemme (2, 3) geschaltete erste Steuerspule (13) zur Erzeugung eines Steuermagnetfelds (B) umfasst, sowie **dadurch gekennzeichnet ist, dass** er

- einen beweglichen Umschaltblock (14) umfasst, auf dem ein elektrischer Hauptleiter (15) sowie ein elektrischer Nebenleiter (16) angeordnet sind und der durch das Steuermagnetfeld (B) beaufschlagt wird, derart, dass er unter Einwirkung einer Laplaceschen Kraft (F), die durch einen, über mindestens einen der beiden Leiter (15, 16) fließenden Strom (I) erzeugt wird, zwischen einer ersten Einschaltstellung und einer zweiten Ausschaltstellung (F) verschoben wird,

- wobei der Hauptleiter (15) die Eingangsklemme (2) und die Ausgangsklemme (3) des Hauptstromkreises (10) miteinander verbindet, wenn sich der bewegliche Umschaltblock (14) in der ersten Einschaltstellung befindet,
- und der Nebenleiter (16) die Eingangs- und die Ausgangsklemme (2, 3) mit den ultraschnellen Begrenzermitteln (22) des Nebenstromkreises (20) verbindet, wenn sich der bewegliche Umschaltblock (14) in der zweiten Ausschaltstellung befindet.

2. Strombegrenzender Leistungsschalter nach Anspruch 1, **dadurch gekennzeichnet, dass** der ultraschnelle Schalter (11) ein feststehendes magnetisches Rückschlusseisen (12) mit zwei, einander gegenüber liegenden Magnetpolen umfasst, wobei der bewegliche Umschaltblock (14) so zwischen den genannten Polen angeordnet ist, dass die Längsachsen des Hauptleiters und des Nebenleiters (15, 16) senkrecht zu dem, die beiden Magnetpole magnetisierenden Steuermagnetfeld (B) ausgerichtet sind.

3. Strombegrenzender Leistungsschalter nach einem der Ansprüche 1 oder 2, dadurch gekenzeichnet, dass der ultraschnelle Schalter (11) eine zweite

---

Steuerspule umfasst (133), die in Reihe zum Nebenstromkreis (20) geschaltet ist und von einem Kurzsschlussstrom durchflossen wird, um ein zusätzliches Steuermagnetfeld ($B_{bis}$) zu erzeugen, das die beiden einander gegenüber liegenden Pole magnetisiert, wobei die beiden Steuermagnetfelder (B, Bis) gleichgerichtet sind.

**4.** Strombegrenzender Leistungsschalter nach Anspruch 1, **dadurch gekennzeichnet, dass** der ultraschnelle Schalter (11) Rückstell-Federmittel zur Rückstellung des beweglichen Blocks (14) in die Einschaltstellung umfasst, wobei die von den Rückstell-Federmittel erzeugte Rückstellkraft kleiner ist als die unter Kurzschlussströmen wirkende Laplacesche Kraft (F).

**5.** Strombegrenzender Leistungsschalter nach Anspruch 1 oder 2, **dadurch gekennzeichnet, dass** die ultraschnellen Begrenzermittel (22) des parallel zum Hauptstromkreis (10) geschalteten Nebenstromkreises (20) einen statischen Schalter (30) umfassen, der durch Steuermittel (30) angesteuert wird.

**6.** Strombegrenzender Leistungsschalter nach Anspruch 1 oder 2, **dadurch gekennzeichnet, dass** die ultraschnellen Begrenzermittel (22) des parallel zum Hauptstromkreis (10) geschalteten Nebenstromkreises (20) einen Leistungsschalter mit mechanischen Kontakten umfassen.

**7.** Strombegrenzender Leistungsschalter nach Anspruch 3, **dadurch gekennzeichnet, dass** der Nebenstromkreis (20) mindestens ein spannungsabhängiges Widerstandselement (24) umfasst, das parallel zu den ultraschnellen Begrenzermitteln (22) geschaltet ist, um die in den genannten Mitteln gespeicherte Energie aufzunehmen, wenn sich der statische Schalter in der Ausschaltstellung befindet.

**8.** Strombegrenzender Leistungsschalter nach irgendeinem der vorhergehenden Ansprüche, **dadurch gekennzeichnet, dass** der Nebenleiter (16) über einen flexiblen, verformbaren Leiter (19) mit den ultraschnellen Begrenzermitteln (22) des Nebenstromkreises (20) verbunden ist.

**9.** Strombegrenzender Leistungsschalter nach irgendeinem der vorhergehenden Ansprüche, **dadurch gekennzeichnet, dass** der Nebenleiter (16) mindestens zwei Leitungspfade umfasst, die gleichmäßig über die Oberfläche des beweglichen Blocks (14) verteilt sind.

## Claims

**1.** A current-limiting circuit breaker (100) designed to be connected to the power system and to a load between an input terminal (2) and an output terminal (3), and comprising

- a main circuit (10) comprising an ultra-fast changeover switch (11) connected in series between the input and output terminals (2, 3), opening of said changeover switch being performed when a short-circuit current (I) flows through the main circuit (10);
- a secondary circuit (20) comprising ultra-fast limiting means (22) connected in parallel with the main circuit (10), an electric short-circuit current (I) flowing through said means when the ultra-fast changeover switch (11) is opened due to the effect of a short-circuit; an ultra-fast changeover switch (11) **characterized in that** it comprises

- a first control coil (13) connected in series between the input and output terminals (2, 3) and being designed to generate a magnetic control field (B), **characterized in that** it comprises
- a mobile switching bar (14) supporting a main electric conductor (15) and a secondary electric conductor (16) and being subjected to the magnetic control field (B) to move between a first closed position and a second open position due to the action of a Laplace force (F) generated by an electric current (I) flowing in at least one of the two conductors (15, 16);

- the main conductor (15) connecting the input terminal (2) and output terminal (3) of the main circuit (10) when the mobile switching bar (14) is in the first closed position;
- the secondary conductor (16) connecting the input and output terminals (2, 3) to the ultra-fast limiting means (22) of the secondary circuit (20) when the mobile switching bar (14) is in the second open position.

**2.** The current-limiting circuit breaker according to claim 1 **characterized in that** the ultra-fast changeover switch (11) comprises a fixed magnetic yoke (12) having two magnetic poles placed facing one another, the mobile switching bar (14) being positioned between said poles in such a way that the main and secondary conductors (15, 16) respectively have longitudinal axes perpendicular to the direction of the magnetic control field (B) polarizing the two magnetic poles.

**3.** The current-limiting circuit breaker according to claims 1 or 2, **characterized in that** the ultra-fast changeover switch (11) comprises a second control coil (133) connected in series with the secondary circuit (20) and through which a short-circuit current flows to generate a complementary magnetic control field ($B_{bis}$) polarizing the two magnetic poles placed facing one another, the magnetic control fields (B, Bis) having the same direction.

**4.** The current-limiting circuit breaker according to claim 1, **characterized in that** the ultra-fast changeover switch (11) comprises flexible biasing means of the mobile bar (14) to the closed position, the flexible biasing means generating a lower biasing force than the Laplace force (F) for short-circuit currents.

**5.** The current-limiting circuit breaker according to claims 1 or 2, **characterized in that** the ultra-fast limiting means (22) of the secondary circuit (20) connected in parallel to the main circuit (10) comprise a static switch controlled by control means (30).

**6.** The current-limiting circuit breaker according to claims 1 or 2, **characterized in that** the ultra-fast limiting means (22) of the secondary circuit (20) connected in parallel to the main circuit (10) comprise a circuit breaker with mechanical contact.

**7.** The current-limiting circuit breaker according to claim 3, **characterized in that** the secondary circuit (20) comprises at least one voltage-dependent resistance element (24) connected in parallel with the ultra-fast limiting means (22) to dissipate the energy stored in said means when the static switch is in an open state.

**8.** The current-limiting circuit breaker according to any one of the foregoing claims, **characterized in that** the secondary conductor (16) is connected to the ultra-fast limiting means (22) of the secondary circuit (20) by a flexible and deformable conductor (19).

**9.** The current-limiting circuit breaker according to any one of the foregoing claims, **characterized in that** the secondary conductor (16) comprises at least two electric branches arranged in uniform manner on the periphery of the mobile bar (14).

**Fig. 1** (Etat de l'art)

Fig. 2

Fig. 3

Fig. 4

**10**

**12**

**13**

**12**

**14**

B

**F** **16**

**20**

**18**

**17**

**22**

**24**

**2**

**3**

**Fig. 5**

**12**

**13**

**15**
**F**

**14**

B

**16**

**11**

D

**Fig. 6**

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102005040432